# EUROPÄISCHE PATENTSCHRIFT

(11) **EP 2 212 091 B1**
(45) Veröffentlichungstag und Bekanntmachung des Hinweises auf die Patenterteilung: **10.05.2017**
(21) Anmeldenummer: 08803011.9
(22) Anmeldetag: 12.08.2008
(51) Int. Cl.: B29C 47/76, B29C 47/84, B01D 5/00

(54) **ENTGASUNGSEXTRUDER ZUR ENTGASUNG EINES POLYMERMATERIALS SOWIE VERFAHREN ZUR ENTGASUNG EINES SIRUPS AUS POLYMEREN, LÖSUNGSMITTELN UND/ODER MONOMEREN UNTER VERWENDUNG EINES ENTGASUNGSEXTRUDERS**
DEGASSING EXTRUDER FOR DEGASSING A POLYMER MATERIAL AND METHOD FOR DEGASSING A SYRUP CONSISTING OF POLYMERS, SOLVENTS AND/OR MONOMERS USING A DEGASSING EXTRUDER
EXTRUDEUSE-DÉGAZEUSE DESTINÉE AU DÉGAZAGE D'UN MATÉRIAU POLYMÈRE ET PROCÉDÉ DE DÉGAZAGE D'UN SIROP DE POLYMÈRES, SOLVANTS ET/OU MONOMÈRES À L'AIDE D'UNE EXTRUDEUSE-DÉGAZEUSE

(30) Priorität: 20.09.2007 DE 102007045156
(43) Veröffentlichungstag der Anmeldung: 04.08.2010
(73) Patentinhaber: Evonik Röhm GmbH, 64293 Darmstadt (DE)
(72) Erfinder: CARLOFF, Rüdiger, 64291 Darmstadt (DE); HEID, Joachim, 64407 Fränkisch-Crumbach (DE); VETTER, Heinz, 64380 Rossdorf (DE)
(86) Internationale Anmeldenummer: PCT/EP2008/060574
(87) Internationale Veröffentlichungsnummer: WO 2009/040189

(56) Entgegenhaltungen:
- EP-A- 0 343 280
- CH-A- 451 497
- JP-A- 58 147 332
- US-A- 3 156 009
- US-A- 3 383 015
- US-A- 3 787 160
- US-A- 3 797 550
- US-A- 4 365 081
- US-A- 5 185 060
- US-A- 5 897 690

## Beschreibung

### Gebiet der Erfindung

Die Erfindung betrifft einen Entgasungsextruder zur Entgasung eines Polymermaterials, gemäß Anspruch 1.

Die Erfindung betrifft weiterhin ein Verfahren gemäß Anspruch 13 zur Entgasung eines Sirups aus Polymeren, Lösungsmitteln und/oder Monomeren unter Verwendung des Entgasungextruders gemäß anspruch 1.

### Stand der Technik

Bei Polymerisationsprozessen wird die Polymerisation häufig in einem Lösungsmittel durchgeführt. Dabei kann das Lösungsmittel zum einen die Monomerlösung selbst und/oder auch ein inertes Lösungsmittel sein. Um das Polymer zu erhalten, müssen die Restmonomere oder das Lösungsmittel, z. B. durch Verdampfung, abgetrennt werden. Eine solche Entgasung erfolgt üblicherweise in einem Entgasungsextruder. Auch werden Entgasungsextruder zur Herstellung von thermoplastischen Kunststoffen verwendet, insbesondere wenn aus dem Ausgangskunststoff Restmonomere entfernt werden sollen.

Je nach zu verdampfendem Massenanteil an Lösungsmittel und/oder Monomeren müssen bei ersterem Verwendungsgebiet der Entgasungsextruder sehr große Dampfvolumenströme abgeführt und in großen Wärmetauschern kondensiert werden. Ein bekannter Entgasungsextruder gemäß dem Oberbegriff des Anspruchs 1, wird in US 3 156 009 A offenbart. Andere bekannte Entgasungsextruder sind üblicherweise so aufgebaut, dass der zu entgasende Materialstrom auf der Antriebsseite der Extruderschnecke zugeführt wird und das entgaste Extrudat zur Schneckenspitze hin gefördert wird. Dabei erfolgt nach einem Druckaufbau im Extruder üblicherweise ein Teil des Weges stromabwärts der Materialeinspeisung eine Druckentlastung des Materials, bei welcher eine Entgasung des Materials bei Atmosphärendruck oder unter Zuhilfenahme von Vakuum erfolgt. Hierzu sind üblicherweise beim Entgasungsextruder die Schneckengänge an einer Stelle tief geschnitten, so dass dort der Druck auf Vakuum- oder Atmosphärenniveau absinkt und man Dampf und Gas absaugen kann. Hinter dieser sog. Entgasungszone wird die Masse dann wieder komprimiert und ein neuer Druck aufgebaut.

Ein Einschnecken-Entgasungsextruder der eingangs genannten Art ist beispielsweise in der EP 0 490 359 A1 beschrieben. Dieser Entgasungsextruder ist in der zuvor beschriebenen Art und Weise aufgebaut und dient dazu, bei der Herstellung von thermoplastischem Kunststoff Restmonomere aus dem Ausgangskunststoff zu entfernen. Hierzu wird mit der Schmelze ein Schleppmittel vermischt. Dabei wird die Schmelze im Entgasungsbereich des Extruders unter möglichst starker Blasenbildung entgast. Zunächst wird der Schmelzedruck auf einen Wert erhöht, der über dem spezifischen Verdampfungsdruck des eingesetzten Schleppmittels liegt. Ist dieser erreicht, lassen sich das Schleppmittel und die Schmelze in flüssiger Phase leicht miteinander vermischen und anschließend unter starker Blasenbildung entspannen.

Zur Entgasung eines Sirups mit einem verhältnismäßig hohen Lösungsmittelanteil oder mit einem verhältnismäßig hohen Anteil an Monomeren ist der aus der EP 0 490 359 A1 bekannte Entgasungsextruder allerdings nicht geeignet.

Zur Erhöhung der Entgasungsleistung werden Extruder ab der stromabwärts zur Einspeisestelle gelegenen Entgasungszonen bis zur Schneckenspitze mit einem durchgängig vergrößerten Zylinder- und Schneckendurchmesser versehen. Die Ausführung ist beispielsweise in EP 0 102 400 A1 und DE 30 268 42 A1 beschrieben. Durch die Zylindervergrößerung kann die Gasgeschwindigkeit abgesenkt werden. Allerdings ist der Extruder stromabwärts hinter den Entgasungszonen im Durchmesser überdimensioniert. Für die Entgasung eines Polymer-Sirups mit hohem Monomer und/oder Lösungsmittelanteil ist es deshalb günstiger die erste Entgasungszone so zu gestalten, dass das Gas stromaufwärts der Materialeinspeisung abgeführt wird, während das Polymer stromabwärts gefördert wird. Diese Ausführungsform ist beispielsweise in EP 0015457A1 dargestellt. Da Gas sowie Monomer- und Lösungsmitteldämpfe zwischen Materialeinspeisung und Getriebe abgeführt werden, muss hier ein erhöhter Aufwand betrieben werden zur Abdichtung zwischen Extruderzylinder und Schneckenschaft gegen Gasaustritt Richtung Getriebe.

Um das Abdichtungsproblem zum Getriebe hin zu Lösen, wurde neben der Gleitringdichtung auch das Spülen des Raumes vor dem Getriebe mit Inertgas vorgeschlagen. Diese Ausführungsform wird in JP 2003 348300 beschrieben. Dieser Lösungsvorschlag hat allerdings den Nachteil, dass bei großen Monomer- und/oder Lösungsmittelströmen ein hoher Inertgasstrom notwendig ist. Diese Ausführungsform führt damit zu hohen Betriebs und Investitionskosten, da das Inertgas im Monomer und/oder Lösungsmittelgas den Wärmeübergang bei der Kondensation dieser Gase reduziert. Es werden damit große Wärmetauscherflächen benötigt.

### Aufgabe

Der Erfindung liegt daher die Aufgabe zugrunde, einen Entgasungsextruder der vorstehend beschriebenen Art so auszugestalten, dass dieser bei einem Sirupstrom mit verhältnismäßig hohem Anteil an Lösungsmittel und Monomer möglichst effektiv Lösungsmittel und Monomer durch Verdampfung vom Polymer abtrennen kann, so, dass Polymere mit geringen Restmengen an Lösungsmittel und/oder Monomer erhalten werden können. Zur Vereinfachung des Sprachgebrauchs soll der Begriff "Lösungsmittel" auch die Monomere mit umfassen.

Insbesondere soll bei hohem Durchsatz mit einem hohen Lösungsmittelanteil verhindert werden, dass Polymer mit dem Gasstrom mitgerissen wird und weder Monomer noch Lösungsmittel oder auch Polymer zum Getriebe gelangt.

### Lösung

Die Aufgabe wird zunächst gelöst durch einen Entgasungsextruder gemäß Anspruch 1 zur Entgasung eines Polymermaterials, umfassend wenigstens einen Antrieb, wenigstens einen Extruderzylinder, wenigstens eine drehbar angetriebene, in dem Extruderzylinder gelagerte Extruderschnecke, wenigstens eine Materialeinspeisung, wenigstens einen Extrudataustrag, wenigstens eine Entgasungszone und wenigstens einen Gasaustrag, wobei sich der Entgasungsextruder gemäß der Erfindung insbesondere dadurch auszeichnet, dass der Antrieb im Bereich des, bezogen auf die Förderrichtung des Polymers, stromabwärts gelegenen Endes der Extruderschnecke vorgesehen ist. Eine solche Konstruktion hat den Vorzug, dass die Möglichkeit besteht, die Hauptmenge des in der Entgasungszone anfallenden Gases entgegengesetzt zur Förderrichtung des Polymermaterials abzuführen. Hierdurch ist es möglich, den Antrieb nur gegen polymeres Material abzudichten, das im Verhältnis zu Monomer und Lösungsmittel eine höhere Viskosität aufweist. Darüber hinaus muss die Abdichtung des Antriebs nicht gegen das verwendete Lösungsmittel beständig sein. Gemäß der Erfindung ist vorgesehen, dass der Gasaustritt für wenigstens einen Teil des in der Entgasungszone anfallenden Gases in Bezug auf die Förderrichtung des Polymermaterials stromaufwärts der Materialeinspeisung vorgesehen ist, so dass das Gas im Bereich der Schneckenspitze im Gegenstrom zum Polymerstrom abgeführt werden kann.

Die in dem Polymermaterial ggf. noch enthaltene Monomer und/oder Lösungsmittelmenge wird stromabwärts in einer oder mehreren Entgasungszonen weiter entgast. Mit anderen Worten, erfindungsgemäß ist vorgesehen, dass anders, als dies bisher im Stand der Technik der Fall war, der Gasstrom entgegen der Förderrichtung des Polymers stromaufwärts in Richtung der Schneckenspitze geführt wird. Der Gasaustritt kann dort stirnseitig und/oder radial und/oder tangential am Extruderzylinder erfolgen. Das Polymer wird in die zur Verdampfung entgegengesetzte Richtung aus der Entgasungszone herausgefördert. Hierdurch ist eine besonders wirksame Trennung von Polymer, Monomer und/oder Lösungsmittel bei verhältnismäßig hohem Durchsatz gewährleistet.

Bei einer Variante des Entgasungsextruders gemäß der Erfindung ist vorgesehen, dass dem Gasaustritt unmittelbar (d.h. zum Beispiel direkt angeflanscht) eine Kondensationskammer nachgeschaltet ist. Durch Kondensation unmittelbar am Gasaustritt des Extruderzylinders kann auf großvolumige Leitungen zur Abfuhr der Dämpfe verzichtet werden. Möglich ist es erfindungsgemäß auch, das Gas über Rohrleitungen, die ggf. beheizt sind, einer Kondensationseinrichtung zuzuführen. Vorzugsweise ist der Gasaustritt am stromaufwärts gelegenen Ende des Extruderzylinders im Bereich der Schneckenspitze vorgesehen. Der Extruderzylinder kann beispielsweise stromaufwärts stirnseitig offen sein, so dass durch das freie Schneckenende die Möglichkeit besteht, die Extruderschnecke ohne Demontage von an den Extruder angebauten Aggregaten durch die Kondensationskammer aus dem Extruder zu ziehen.

Um das in die Kondensationskammer einströmende Gas zu kondensieren, ist bei einer besonders vorteilhaften Variante des Entgasungsextruders vorgesehen, dass in die Kondensationskammer Flüssigkeiten zum Kondensieren des in die Kammer strömenden Gases eingesprüht oder eingedüst werden. Die Kondensation mit einer eingesprühten Flüssigkeit erlaubt den Verzicht auf große Wärmetauscher. Durch diese Art der Ausführung können auch Sirupströme mit einem hohen Anteil an Lösungsmittel und/oder Monomer auf kleinem Raum kondensiert werden. Durch die Gasströmung zufällig in die Kondensationskammer gelangtes Polymer kann durch Wahl einer Kondensationsflüssigkeit, die mit dem Polymer mischbar ist, automatisch aufgelöst und ausgetragen werden.

Es ist natürlich auch möglich, zusätzlich oder alleine das in die Kondensationskammer strömende Gas in einem Wärmetauscher zu kondensieren, der an die Kondensationskammer angeschlossen ist. Bei dieser Variante kann das Kondensat (Flüssigkeit) in die Kondensationskammer zurückgeführt und/oder anderweitig abgeführt werden. Gemäß der Erfindung, ist die Entgasungszone im Bereich der Materialeinspeisung vorgesehen. Der Gasstrom wird entgegengesetzt dem Polymerstrom transportiert. Das unter Druck und Temperatur eingespeiste Material wird direkt im Bereich der Materialeinspeisung in den Extruder entspannt, so dass in der Entgasungszone die Verdampfung des Lösungsmittels oder Monomers vonstatten geht. Dabei entsteht ein großer Dampfvolumenstrom, der möglichst ohne Polymermitriß in Richtung Kondensationskammer abgeführt wird.

Vorteilhaft ist es, wenn die Entgasungszone durch einen Abschnitt des Extruderzylinders mit erweitertem Innendurchmesser gebildet wird. Die Materialeinspeisung erfolgt dabei im Bereich des erweiterten Extruderzylinders oder an einem der Ränder der Erweiterung, oder außerhalb der Erweiterung, wenn sich die Erweiterung stromaufwärts der Materialeinspeisestelle befindet. Im Stand der Technik ist es bekannt, die Gangtiefe der Extruderschnecke zu verändern oder den Kerndurchmesser der Extruderschnecke zu verringern, was allerdings weniger vorteilhaft ist, da insbesondere letztere Variante zu einer Schwächung des Extruderschneckenquerschnitts führt.

Die letzten beiden Möglichkeiten zur Schneckenmodifikation können selbstverständlich zusätzlich genutzt werden.

Die Durchmessererweiterung im Extruderzylinder hat insbesondere den Vorteil, dass die Gasgeschwindigkeit des Dampfes reduziert wird, was ebenfalls einen Mitriss von Polymer verringert.

Zweckmäßigerweise beträgt der Innendurchmesser des Extruderzylinders in der Entgasungszone zwischen dem 1,01-fachen und dem 3-fachen, vorzugsweise zwischen dem 1,01-fachen und dem 2-fachen und ganz besonders bevorzugt zwischen dem 1,01-fachen und dem 1,6-fachen des Innendurchmessers des Extruderzylinders außerhalb der Entgasungszone.

Im Bereich des Zylinders mit vergrößertem Innendurchmesser können an der Innenoberfläche zusätzlich Stege vorgesehen sein, die den Transport der PolymerSchmelze stromabwärts unterstützen. Diese sind wendelförmig ausgeführt, um Todvolumina zu vermeiden und führen zu einer gleichmäßigen und stabilen Entgasung.

Die Länge der Entgasungszone ist zweckmäßigerweise so gewählt, dass diese zwischen dem 0,5- und 10-fachen, vorzugsweise zwischen dem 1- bis 7-fachen und ganz besonders bevorzugt zwischen dem 1- bis 5-fachen des Innendurchmessers des Extruderzylinders außerhalb der Entgasungszone beträgt.

Besonders vorteilhaft ist es, wenn die Materialeinspeisung auf dem Umfang des Extruderzylinders an zwei diametral gegenüberliegenden Stellen in der Entgasungszone vorgesehen ist. Durch eine Aufteilung des Sirupstroms über den Umfang des Extruderzylinders ist ein besserer Transport der Dämpfe und des teilentgasten Polymers aus der Entgasungszone gewährleistet. Die gleichmäßige Ausnutzung des Extrudervolumens verringert die Neigung zur Staubildung in der Entgasungszone.

Vorzugweise ist wenigstens ein Einspeiseventil, bevorzugt ist das Einspeiseventil ansteuerbar, vorgesehen, mit welchem der Volumenstrom der Materialeinspeisung regelbar ist. Idealerweise sind zwei einander diametral gegenüberliegend angeordnete Einspeiseventile vorgesehen, mit welchen der Volumenstrom der Materialeinspeisung regelbar ist. Dies hat den Vorteil, dass der Dosierstrom unabhängig von den Druckverhältnissen im Prozess auf einen gewünschten Wert innerhalb der Durchflusskennlinie der Ventile einstellbar ist.

Bei einer besonders vorteilhaften Ausgestaltung des Entgasungsextruders gemäß der Erfindung ist vorgesehen, dass die Extruderschnecke axial von einem geschlossenen Dampfkanal durchsetzt ist, der eine Teilfüllung einer verdampfbaren Flüssigkeit aufweist. Dieser Dampfkanal dient dazu, den Temperaturgradienten der Schmelze in Längsrichtung der Extruderschnecke zu kompensieren. Die Schmelzetemperatur ist im Bereich der Sirupeinspeisung durch die Verdampfung von Lösungsmittel und Monomer sehr niedrig, während sie kurz vor dem Austrag infolge der Reibungswärme der Extruderschnecke sehr hoch ist. Eine zu hohe Schmelzetemperatur führt zur Schädigung des Produkts, wohingegen eine sehr niedrige Schmelzetemperatur die Förderung der Schmelze im Extruder beeinträchtigt.

In dem Dampfkanal kondensiert die enthaltene Flüssigkeit im Bereich der Materialeinspeisung, die frei werdende Kondensationswärme wirkt einer zu starken Abkühlung der Schmelze in diesem Bereich entgegen, wohingegen in den übrigen Bereichen der Extruderschnecke die in dem Dampfkanal enthaltene Flüssigkeit verdampft und so einer Überhitzung entgegenwirkt.

Der Dampfkanal kann beispielsweise einen Füllgrad von 20 Vol.-% bis 80 Vol.-%, vorzugsweise zwischen 30 Vol.-% und 60 Vol.-% aufweisen, gemessen bei der Umgebungstemperatur von ca. 20° C.

Die der Erfindung zugrunde liegende Aufgabe wird weiterhin gelöst durch ein Verfahren gemäß Anspruch 13 zur Entgasung eines Sirups aus Polymeren, Lösungsmitteln und/oder Monomeren unter Verwendung eines Entgasungsextruders, welches sich dadurch auszeichnet, dass der bei der Entgasung anfallende Gasstrom innerhalb des Extruders entgegengesetzt zu dem Polymerstrom geführt wird. Vorteilhafterweise erfolgt ein größerer Teil der Entgasung des Sirups im Bereich der Einspeisung in den Extruder, der ersten Entgasungszone.

Im Bereich dieser Entgasungszone werden > 50 Gew.-% der Monomere und/oder der Lösungsmittel entgast, bezogen auf die Gesamtmengen der Monomere und/oder der Lösungsmittel. Das Gas tritt durch einen Entgasungsaustritt aus.

Nach einer vorteilhaften Variante des Verfahrens ist vorgesehen, dass das anfallende Gas unmittelbar am Gasaustritt des Extruders in einem Behälter kondensiert wird.

Die Kondensation kann in Form einer Sprühkondensation unter Einsprühung oder Einrieselung einer Flüssigkeit vollzogen werden, vorzugsweise unter Einrieselung oder Einsprühung einer Flüssigkeit, in der das Polymer lösbar ist. Es ist aber auch eine Kondensation in einem an der Kondensationskammer angeschlossenen Wärmetauscher denkbar.

Weitere Entgasungszonen und Entgasungsaustritte können sowohl stromabwärts als auch stromaufwärts vorgesehen sein und dienen zur Restentgasung des Polymers.

Die Erfindung wird nachstehend anhand eines Ausführungsbeispiels unter Zuhilfenahme der beigefügten Zeichnungen erläutert.

Es zeigen:
- Figur 1: eine schematische Darstellung des Entgasungsextruders mit einer daran angeschlossenen Kondensationskammer und ohne Antrieb, teilweise im Schnitt, und
- Figur 2: eine schematische Darstellung des Entgasungsextruders gemäß der Erfindung mit Getriebe und Motor, jedoch ohne die angeschlossene Kondensationskammer.

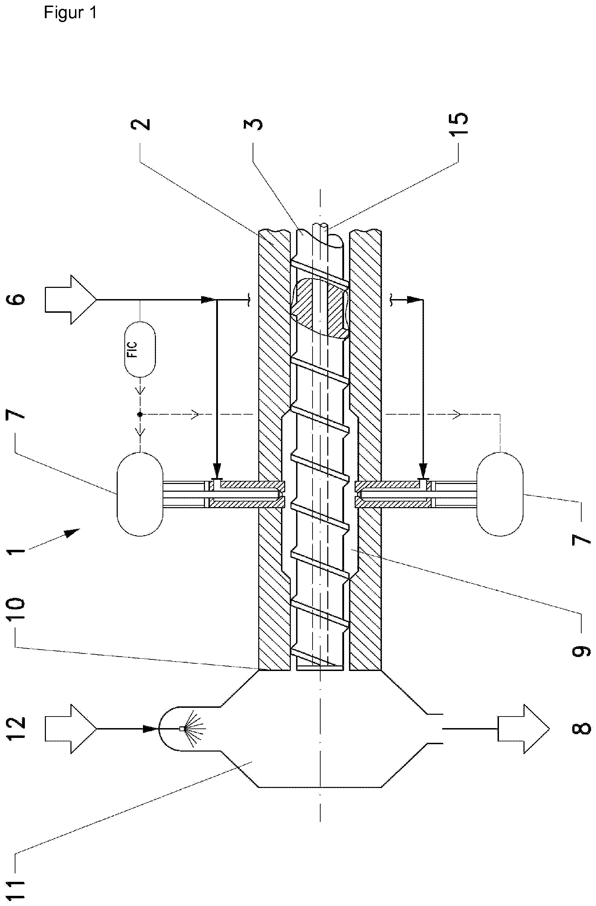

Figur 1 zeigt nur einen Teil des mit (1) bezeichneten Entgasungsextruders. Der Entgasungsextruder (1) umfaßt ein Extruderzylinder (2) sowie eine in dem Extruderzylinder (2) drehbar gelagerte Extruderschnecke (3). Die Extruderschnecke (3) wird von einem Antrieb (4) über ein zwischengeschaltetes Getriebe (5) in Drehung versetzt. Als Antrieb (4) kann beispielsweise ein Elektromotor vorgesehen sein.

Wie bereits vorstehend erwähnt, sind der Antrieb (4) und das Getriebe (5) in der Figur 1 nicht dargestellt, diese befinden sich in der Zeichnung rechts. Das Polymer/Monomer-Gemisch wird über eine sich verzweigende Speiseleitung (6) an zwei diametral gegenüberliegenden Stellen des Extruderzylinders (2) über Einspeiseventile (7) dem Extruderzylinder (2) zugeführt.

Der Entgasungsextruder (1) gemäß der Erfindung ist als sog. "Einschneckenextruder" ausgebildet, dieser könnte allerdings auch als Doppelschneckenextruder ausgebildet sein.

Der Extrusionszylinder (2) ist im Bereich der Einspeiseventile (7) querschnittlich erweitert, d. h. dessen Innendurchmesser ist etwa um den Faktor 1,01 bis 3 größer als der reguläre Innendurchmesser des Extruderzylinders (2) außerhalb dieses Bereichs. Dort entspricht der Innendurchmesser des Extruderzylinders (2) etwa dem Außendurchmesser des Schneckengangs der Extruderschnecke (3) (unter Berücksichtigung etwaiger Toleranzen). Der Bereich größeren Innendurchmessers des Extruderzylinders (2) definiert die Entgasungszone. Über die Speiseleitung (6) wird das Monomer/Polymer-Gemisch und/oder ein Lösungsmittel/Polymer-Gemisch unter Druck und Temperatur in den Extruderzylinders (2) eingespeist. In der Entgasungszone (9) findet eine starke Druckreduzierung statt, so dass das Monomer und/oder das Lösungsmittel aus dem Polymer entgasen kann. Darüber hinaus wird in diesem Bereich die Strömungsgeschwindigkeit des Materials verringert. Das Polymer wird in der Zeichnung nach rechts in Richtung Antrieb gefördert. Die in diesem Zusammenhang verwendeten Begriffe "stromabwärts" und "stromaufwärts" beziehen sich immer auf die Förderrichtung des Polymers.

Erfindungsgemäß ist nun vorgesehen, dass das in der Entgasungszone (9) anfallende Gas bzw. der dort anfallende Dampf in der Zeichnung nach links, also stromaufwärts der Einspeiseventile (7) gefördert wird.

Das stromaufwärts gelegene Ende (10) des Extruderzylinders (2) ist stirnseitig offen und mündet in eine Kondensationskammer (11), in die das in der Entgasungszone (9) angefallene Gas einströmt.

Mit (12) ist eine Einsprühung einer Flüssigkeit bezeichnet, über die das Gas / der Dampf in der Kondensationskammer abgekühlt und kondensiert wird. Die verwendete Flüssigkeit ist zweckmäßigerweise mit dem Polymer mischbar, so dass ein etwaiger Polymermitriß in der Flüssigkeit gelöst wird. Alternativ oder zusätzlich können andere Mittel zur Kondensation eingesetzt werden wie z.B. Wärmetauscher/Kondensatoren.

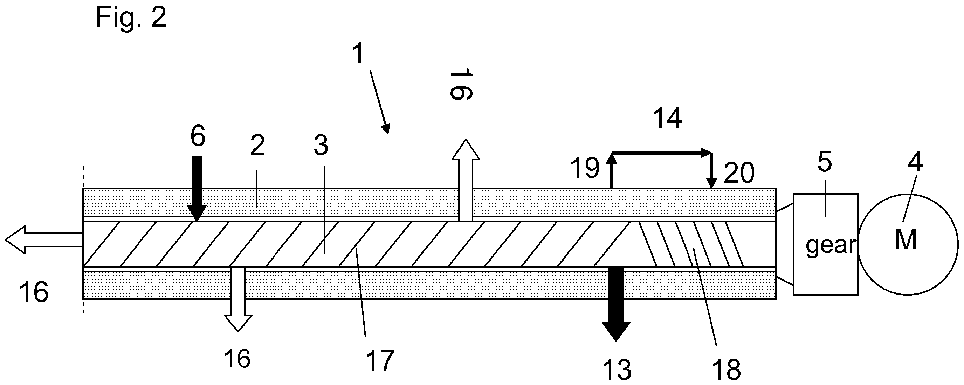

Wie dies in Figur 2 dargestellt ist, ist der Antrieb 4 stromabwärts der Einspeiseventile (7) angeordnet. D.h. das Polymer wird von der Extruderspitze/Schneckenspitze in Richtung Antriebsseite gefördert.

Wie der Figur 2 weiterhin zu entnehmen ist, besitzt der Entgasungsextruder (1) gemäß der Erfindung einen tangentialen bzw. radialen Extrudataustrag (13) an seinem von der Einspeisestelle (6) entgegengesetzten Ende.

Wie aus Figur 1 ersichtlich ist, ist die Extruderschnecke axial von einem geschlossenen Dampfkanal (15) durchsetzt, der eine Teilfüllung einer verdampfbaren Flüssigkeit aufweist. Die Verdampfung von Lösungsmittel oder Monomer führt im Dosierbereich des Extruders zu einer starken Abkühlung des Polymers. Mit Hilfe des Dampfkanals kann das stark abgekühlte Polymer auf der kurzen Strecke wieder erwärmt werden, wenn dort die Flüssigkeit im Dampfkanal (15) kondensiert. Der Dampfkanal (15) stellt neben der Beheizung des Extruderzylinders im Einspeisebereich und der Reibungswärme der Extruderschnecke (3) eine zusätzliche Wärmequelle für die (teil)entgaste Schmelze im Einspeisebereich des Sirups dar. Damit kann durch diese Ausführung der Durchsatz auf dem Extruder maximiert werden. Im Bereich des Extrudataustritts (13) kühlt die Verdampfung innerhalb der Extruderschnecke die Schmelze bzw. das Extrudat.

Überschüssige Reibungswärme kann abgeführt werden, was sich schonend auf das Produkt auswirkt.

Bei dem Entgasungsextruder (1) gemäß der Erfindung, sind der Antrieb (4) und das Getriebe (5) an dem in Förderrichtung des Polymers stromabwärts gelegenen Ende des Entgasungsextruders (1), d. h. an dem von einer ersten Materialeinspeisung(6) entgegengesetzten Ende vorgesehen.

Die Extruderschnecke (3) umfaßt einen ersten Gewindeabschnitt (17), bei dem das Gangprofil so ausgerichtet ist, dass in dem Extruderzylinder (2) eine Schleppströmung von der ersten Materialeinspeisung (6) in Richtung auf den Extrudataustrag (13) erzeugt wird.

Der Extrudataustrag (13) des Entgasungsextruders (1) ist in Bezug auf die Längsachse der Extruderschnecke (3) radial oder tangential ausgerichtet, so dass das Polymer stromaufwärts des Getriebes (5) und des Antriebs (4) ausgetragen wird.

Die Extruderschnecke (3) umfaßt weiterhin einen zweiten Gewindeabschnitt (18), in welchem das Gangprofil so ausgerichtet ist, dass eine Rückförderung entgegen der Förderrichtung des ersten Gewindeabschnitts (17) erzielt wird. Der zweite Gewindeabschnitt (18) dient somit der Abdichtung auf der Antriebsseite des Extruders gegenüber dem Hauptförderstrom des Polymers.

Mit (19) ist ein aus dem Hauptförderstrom des Polymers abgezweigter Förderstrom bezeichnet, der über einen Bypass (14) und eine zweite Materialeinspeisung (20) in den Bereich des zweiten Gewindeabschnitts (18) des Extruderzylinders (2) eingespeist wird. Der Bypass kann außerhalb oder innerhalb des Extruderzylinders verlaufen. Über das aus dem Hauptförderstrom abgezweigte Polymer wird in dem Bereich des zweiten Gewindeabschnitts (18) der Extruderschnecke (3) eine ständige Rückspülung mit frischem Polymer bewirkt. In diesem Bereich wird das Polymer aus der Richtung des Getriebes (5) in Richtung des Extrudataustrags (13) gefördert. Somit werden dort keine Polymerreste stromabwärts des Extrudataustrags (13) verweilen können.

Wie aus der Zeichnung ersichtlich ist, ist der Extrudataustrag (13) in etwa am stromabwärts gelegenen Ende des ersten Gewindeabschnitts (17) angeordnet.

Der Entgasungsextruder gemäß der Erfindung ist zweckmäßigerweise in bekannter Art und Weise beheizt.

### Bezugszeichenliste

- 1: Entgasungsextruder
- 2: Extruderzylinder
- 3: Extruderschnecke
- 4: Antrieb
- 5: Getriebe
- 6: Speiseleitung
- 7: Einspeiseventile
- 8: Kondensatablauf
- 9: Entgasungszone
- 10: stromaufwärts gelegenes Ende des Entgasungsextruders
- 11: Kondensationskammer
- 12: Einsprühung
- 13: Extrudataustrag
- 14: Bypass
- 15: Dampfkanal
- 16: Gasaustritte
- 17: Erster Gewindeabschnitt
- 18: Zweiter Gewindeabschnitt
- 19: abgezweigter Polymerstrom
- 20: zweite Materialeinspeisung

## Patentansprüche

1. Entgasungsextruder (1) zur Entgasung eines Polymermaterials, umfassend wenigstens einen Antrieb (4), wenigstens einen Extruderzylinder (2), wenigstens eine drehbar angetriebene, in dem Extruderzylinder (2) gelagerte Extruderschnecke (3), wenigstens eine Materialeinspeisung, wenigstens einen Extrudataustrag (13), wenigstens eine Entgasungszone (9), wenigstens einen Gasaustrag und wenigstens eine dem Gasaustritt unmittelbar nachgeschaltete oder mit dem Gasaustritt über Rohrleitungen verbundene Kondensationskammer (11) der Antrieb im Bereich des, bezogen auf die Förderrichtung des Polymers, stromabwärts gelegenen Ende der Extruderschnecke (3) vorgesehen ist, **dadurch gekennzeichnet, dass** die Entgasungszone (9) durch einen Abschnitt des Extruderzylinders (2) mit erweitertem Innendurchmesser gebildet wird,
die Materialeinspeisung im Bereich der Entgasungszone (9) vorgesehen ist, und mindestens ein Teil des anfallenden Gasstroms am in Bezug auf die Förderrichtung des Polymermaterials und der Materialeinspeisung stromaufwärts gelegenen Ende des Extruderzylinders (2) abführbar ist und dort, unmittelbar, in die Kondensationskammer mündet.

2. Entgasungsextruder nach Anspruch 1,
**dadurch gekennzeichnet, dass**
die Entgasungszone (9) durch einen Abschnitt des Extruderzylinders (2) mit erweitertem Innendurchmesser gebildet wird, der nicht an einem Ende des Extruderzylinders positioniert ist.

3. Entgasungsextruder nach Anspruch 1 oder 2,
**dadurch gekennzeichnet, dass**
in der Kondensationskammer (11) Mittel zum Einsprühen oder Eindüsen einer Flüssigkeit vorgesehen sind.

4. Entgasungsextruder nach einem der Ansprüche 1 bis 3, wobei vorgesehen ist, dass das über die Materialeinspeisung zugeführte Polymer unter Druck und Temperatur in den Extruderzylinder (2) eingespeist wird, und
dass in der Entgasungszone (9) eine Druckreduzierung stattfindet.

5. Entgasungsextruder nach einem der Ansprüche 1 bis 4,
**dadurch gekennzeichnet, dass**
der Innendurchmesser des Extruderzylinders (2) in der Entgasungszone (9) zwischen dem 1,01-fachen und dem 3-fachen, bevorzugt zwischen dem 1,01-fachen und dem 2-fachen, besonders bevorzugt zwischen dem 1,01-fachen und dem 1,6-fachen, des Innendurchmessers des Extruderzylinders (2) außerhalb der Entgasungszone (9) beträgt.

6. Entgasungsextruder nach einem der Ansprüche 1 bis 5,
**dadurch gekennzeichnet, dass**
in dem Extruderzylinder (2) im Bereich der Entgasungszone Einbauten vorgesehen sind, die den Transport der Polymerschmelze unterstützen.

7. Entgasungsextruder nach Anspruch 6,
**dadurch gekennzeichnet, dass**
als Einbauten wendelförmige Stege vorgesehen sind.

8. Entgasungsextruder nach einem der Ansprüche 1 bis 7,
**dadurch gekennzeichnet, dass**
die Länge der Entgasungszone (9) zwischen dem 0,5- und 10-fachen, bevorzugt zwischen dem 1- und 7-fachen, des Innendurchmessers des Extruderzylinders (2) außerhalb der Entgasungszone (9) beträgt.

9. Entgasungsextruder nach einem der Ansprüche 1 bis 8
**dadurch gekennzeichnet, dass**
die Materialeinspeisung an mindestens einer auf dem Umfang des Extruderzylindes (2) liegenden Stelle in der Entgasungszone (9) vorgesehen ist.

10. Entgasungsextruder nach einem der Ansprüche 1 bis 9,
**dadurch gekennzeichnet, dass**
wenigstens ein Einspeiseventil (7) vorgesehen ist, mit welchem der Volumenstrom der Materialeinspeisung regelbar ist.

11. Entgasungsextruder nach einem der Ansprüche 1 bis 10,
**dadurch gekennzeichnet, dass**
die Extruderschnecke (3) axial von einem geschlossenen Dampfkanal (15) durchsetzt ist, der eine Teilfüllung einer verdampfbaren Flüssigkeit, bei der es sich bevorzugt um Wasser handelt, aufweist.

12. Entgasungsextruder nach einem der Ansprüche 1 bis 11,
**dadurch gekennzeichnet, dass**
der Füllgrad des Dampfkanals (15) mit der verdampfbaren Flüssigkeit oder Wasser zwischen 20 Vol.-% bis 80 Vol.-%, bevorzugt zwischen 30 Vol.-% bis 60 Vol.-% beträgt, gemessen bei der Umgebungstemperatur von ca. 20° C.

13. Verfahren zur Entgasung eines Sirups aus Polymeren, Lösungsmitteln und/oder Monomeren unter Verwendung eines Entgasungsextruders nach einem der Ansprüche 1 bis 12,
**dadurch gekennzeichnet, dass**
der bei der Entgasung anfallende Gasstrom innerhalb des Extruders entgegengesetzt zu dem Polymerstrom geführt wird.

14. Verfahren nach Anspruch 13,
**dadurch gekennzeichnet, dass**
das anfallende Gas unmittelbar am Gasaustritt des Extruders in einer Kondensationskammer kondensiert wird.

15. Verfahren nach Anspruch 14,
**dadurch gekennzeichnet, dass**
die Kondensation als Sprühkondensation unter Einsprühung oder Einrieselung einer Flüssigkeit vollzogen wird und/oder durch einen Wärmetauscher vollzogen wird.

16. Verfahren nach einem der Ansprüche 13 bis 15,
**dadurch gekennzeichnet, daß**
die Entgasung des Sirups im Bereich der Einspeisung in den Extruder erfolgt.

17. Verfahren nach einem der Ansprüche 13 bis 16,
**dadurch gekennzeichnet, daß**
der Entgasungsgrad des Sirups beim ersten Entgasungsschritt > 50 Gew.%. beträgt, bezogen auf die Gesamtmenge der Monomeren und/oder des Lösungsmittels.

## Claims

1. Vented extruder (1) for the devolatilization of a polymer material, encompassing at least one drive (4), at least one extruder barrel (2), at least one rotatably driven extruder screw (3) mounted in the extruder barrel (2), at least one material feed, at least one extrudate outlet (13), at least one vent zone (9), at least one gas outlet, and at least one condensation chamber (11) provided immediately downstream of the gas output or connected to the gas output by way of pipelines,
the drive has been provided in the region of that end of the extruder screw (3) that is downstream in relation to the direction of conveying of the polymer,
**characterized in that**
the vent zone (9) is formed via a section of the extruder barrel (2) with increased internal diameter,
the material feed has been provided in the region of the vent zone (9), and
at least a portion of the gas stream arising can be taken off at that end of the extruder barrel (2) that is upstream in relation to the direction of conveying of the polymer material and of the material feed, and opens there directly into the condensation chamber.

2. Vented extruder according to Claim 1,
**characterized in that**
the vent zone (9) is formed via a section of the extruder barrel (2) with increased internal diameter that is not positioned at one end of the extruder barrel.

3. Vented extruder according to Claim 1 or 2,
**characterized in that**
means for the spraying-in or injection of a liquid have been provided in the condensation chamber (11).

4. Vented extruder according to any of Claims 1 to 3, it having been provided that
the polymer introduced by way of the material feed is fed under conditions of pressure and heat into the extruder barrel (2) and,
a pressure reduction takes place in the vent zone (9).

5. Vented extruder according to any of Claims 1 to 4,
**characterized in that**
the internal diameter of the extruder barrel (2) in the vent zone (9) is from 1.01 to 3 times, preferably from 1.01 to 2 times, most preferably from 1.01 to 1.6 times, the internal diameter of the extruder barrel (2) outside the vent zone (9).

6. Vented extruder according to any of Claims 1 to 5,
**characterized in that**
internals have been provided in the extruder barrel (2) in the region of the vent zone, and promote the transport of the polymer melt.

7. Vented extruder according to Claim 6,
**characterized in that**
helical fillets have been provided as internals.

8. Vented extruder according to any of Claims 1 to 7,
**characterized in that**
the length of the vent zone (9) is from 0.5 to 10 times, preferably from 1 to 7 times, the internal diameter of the extruder barrel (2) outside the vent zone (9).

9. Vented extruder according to any of Claims 1 to 8,
**characterized in that**
the material feed has been provided at at least one site on the periphery of the extruder barrel (2) in the vent zone (9).

10. Vented extruder according to any of Claims 1 to 9,
**characterized in that**
at least one feed valve (7) has been provided, and can control the volume flow rate of the material feed.

11. Vented extruder according to any of Claims 1 to 10,
**characterized in that**
passing axially through the extruder screw (3) there is a closed vapour channel (15), partially filled by a vaporisable liquid, which is preferably water.

12. Vented extruder according to any of Claims 1 to 11,
**characterized in that**
the extent of filling of the vapour channel (15) with the vaporisable liquid or water is from 20% by volume to 80% by volume, preferably from 30% by volume to 60% by volume, measured at the ambient temperature of about 20°C.

13. Process for the devolatilization of a syrup composed of polymers, of solvents and/or of monomers, using a vented extruder according to any of Claims 1 to 12,
**characterized in that**
the gas stream arising during devolatilization within the extruder is conducted in opposition to the polymer stream.

14. Process according to Claim 13,
**characterized in that**
the gas arising is condensed in a condensation chamber immediately at the gas output of the extruder.

15. Process according to Claim 14,
**characterized in that**
the condensation is spray condensation, where a liquid is sprayed into, or trickled into, the system and/or the condensation is achieved via a heat exchanger.

16. Process according to any of Claims 13 to 15,
**characterized in that**
the syrup is devolatilized in the region of the feed into the extruder.

17. Process according to any of Claims 13 to 16,
**characterized in that**
the extent of devolatilization of the syrup in the first devolatilization step is greater > 50% by weight, based on the total amount of the monomers and/or of the solvent.

## Revendications

1. Extrudeuse à dégazage (1) destinée au dégazage d'un matériau polymère, comprenant au moins un système d'entraînement (4), au moins un fourreau d'extrudeuse (2) au moins une vis d'extrudeuse (3) logée dans le fourreau d'extrudeuse (2), entraînée en rotation, au moins une alimentation en matériau, au moins une décharge d'extrudat (13), au moins une zone de dégazage (9), au moins une évacuation de gaz et au moins une chambre de condensation (11) raccordée immédiatement en aval à la sortie de gaz ou reliée à la sortie de gaz par des conduits tubulaires,
le système d'entraînement est prévu dans la zone de l'extrémité située en aval, par rapport au sens d'acheminement du polymère, de la vis d'extrudeuse (3),
**caractérisée en ce que**
la zone de dégazage (9) est formée par un segment du fourreau d'extrudeuse (2) à diamètre interne élargi, l'alimentation en matériau est prévue dans la partie de la zone de dégazage (9), et au moins une partie du courant de gaz formé peut être évacuée à l'extrémité du fourreau d'extrudeuse (2), située en amont de l'alimentation en matériau et par rapport au sens d'acheminement du matériau polymère, et, immédiatement, y débouche dans la chambre de condensation.

2. Extrudeuse à dégazage selon la revendication 1, **caractérisée en ce que**
la zone de dégazage (9) est formée par un segment du fourreau d'extrudeuse (2) à diamètre interne élargi, qui n'est pas positionné à une extrémité du fourreau d'extrudeuse.

3. Extrudeuse à dégazage selon la revendication 1 ou 2,
**caractérisée en ce que**
dans la chambre de condensation (11) sont prévus des moyens pour la pulvérisation ou l'injection d'un liquide.

4. Extrudeuse à dégazage selon l'une quelconque des revendications 1 à 3,
dans laquelle il est prévu que
le polymère amené par l'alimentation en matériau est introduit sous pression et température dans le fourreau d'extrudeuse (2), et
qu'une réduction de pression a lieu dans la zone de dégazage (9).

5. Extrudeuse à dégazage selon l'une quelconque des revendications 1 à 4,
**caractérisée en ce que**
le diamètre interne du fourreau d'extrudeuse (2) dans la zone de dégazage (9) représente entre 1,01 fois et 3 fois, de préférence entre 1,01 fois et 2 fois, de façon particulièrement préférée entre 1,01 fois et 1,6 fois le diamètre interne du fourreau d'extrudeuse (2) en dehors de la zone de dégazage (9).

6. Extrudeuse à dégazage selon l'une quelconque des revendications 1 à 5,
**caractérisée en ce que**
dans le fourreau d'extrudeuse (2) des inserts qui facilitent le transport de la masse fondue de polymère sont prévus dans la partie de la zone de dégazage.

7. Extrudeuse à dégazage selon la revendication 6, **caractérisée en ce que**
des barres hélicoïdales sont prévues en tant qu'inserts.

8. Extrudeuse à dégazage selon l'une quelconque des revendications 1 à 7,
**caractérisée en ce que**
la longueur de la zone de dégazage (9) représente entre 0,5 et 10 fois, de préférence entre 1 et 7 fois, le diamètre interne du fourreau d'extrudeuse (2) en dehors de la zone de dégazage (9).

9. Extrudeuse à dégazage selon l'une quelconque des revendications 1 à 8,
**caractérisée en ce que**
l'alimentation en matériau est prévue en au moins un point dans la zone de dégazage (9), situé à la périphérie du fourreau d'extrudeuse (2).

10. Extrudeuse à dégazage selon l'une quelconque des revendications 1 à 9,
**caractérisée en ce**
**qu'**est prévue au moins une vanne d'alimentation (7), avec laquelle le flux volumique de l'alimentation en matériau est réglable.

11. Extrudeuse à dégazage selon l'une quelconque des revendications 1 à 10,
**caractérisée en ce que**
la vis d'extrudeuse (3) est traversée axialement par un canal de vapeur (15) fermé, qui comporte un remplissage partiel avec un liquide vaporisable qui consiste de préférence en eau.

12. Extrudeuse à dégazage selon l'une quelconque des revendications 1 à 11,
**caractérisée en ce que**
le degré de remplissage du canal de vapeur (15) avec l'eau ou le liquide vaporisable est compris entre 20 % en volume et 80 % en volume, de préférence entre 30 % en volume et 60 % en volume, mesuré à la température ambiante d'environ 20 °C.

13. Procédé pour le dégazage d'un sirop de polymères, solvants et/ou monomères, avec utilisation d'une extrudeuse à dégazage selon l'une quelconque des revendications 1 à 12,
**caractérisé en ce que**
le courant de gaz apparaissant lors du dégazage est conduit à l'intérieur de l'extrudeuse en sens opposé au courant de polymère.

14. Procédé selon la revendication 13,
**caractérisé en ce que**
le gaz apparaissant est immédiatement à la sortie du gaz de l'extrudeuse condensé dans une chambre de condensation.

15. Procédé selon la revendication 14,
**caractérisé en ce que**
la condensation est effectuée en tant que condensation par pulvérisation ou écoulement goutte à goutte d'un liquide et/ou au moyen d'un échangeur thermique.

16. Procédé selon l'une quelconque des revendications 13 à 15,
**caractérisé en ce que**
le dégazage du sirop a lieu dans la zone de l'alimentation dans l'extrudeuse.

17. Procédé selon l'une quelconque des revendications 13 à 16,
**caractérisé en ce que**
le degré de dégazage du sirop lors de la première étape de dégazage est > 50 % en poids, par rapport à la quantité totale des monomères et/ou du solvant.
